(19)

**Europäisches Patentamt**
**European Patent Office**
**Office européen des brevets**

(11) **EP 2 006 838 B1**

(12) **EUROPEAN PATENT SPECIFICATION**

(45) Date of publication and mention
of the grant of the patent:
**16.12.2009 Bulletin 2009/51**

(51) Int Cl.:
*G10L 19/00* ^(2006.01)        *G10L 21/02* ^(2006.01)

(21) Application number: **08102518.1**

(22) Date of filing: **12.03.2008**

(54) **Apparatus and method for transmitting/receiving voice data to estimate a voice data value corresponding to a resynchronization period**

Vorrichtung und Verfahren zum Senden/Empfangen von Sprachdaten zur Schätzung eines Sprachdatenwertes entsprechend einem Neusynchronisationszeitraum

Appareil et procédé pour transmettre/recevoir des données vocales pour estimer une valeur des données vocales correspondante à une période de resynchronisation

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.06.2007 KR 20070059545**

(43) Date of publication of application:
**24.12.2008 Bulletin 2008/52**

(73) Proprietor: **Electronics and Telecommunications Research Institute**
**Yuseong-gu**
**Daejon 305-350 (KR)**

(72) Inventors:
• **Nam, Taek Jun**
**300-755 Daejeon (KR)**

• **Ahn, Byeong-Ho**
**302-233 Daejeon (KR)**
• **Ryu, Seok**
**305-745 Daejeon (KR)**
• **Yi, Sang-Yi**
**305-761 Daejeon (KR)**

(74) Representative: **Betten & Resch**
**Patentanwälte**
**Theatinerstrasse 8**
**(Fünf Höfe)**
**80333 München (DE)**

(56) References cited:
**EP-A- 1 921 608          WO-A-2007/051124**
**US-A1- 2004 010 407**

EP 2 006 838 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

## BACKGROUND OF THE INVENTION

### Field of the Invention

The present invention relates to an apparatus and method for transmitting/receiving voice data in order to estimate a voice data value corresponding to a silent period produced in a key resynchronization process while encrypted digital voice is transmitted in one-way wireless communication environment, and more particularly, to an apparatus and method for transmitting/receiving voice data in order to estimate a voice data value corresponding to a silent period produced in a key resynchronization process by inserting vector information into a key resynchronization frame, wherein the vector information relates to voice change direction based on the fact that voice has sine waveform with no sudden change.

### Description of the Related Art

In a related art communication system, key data or preceding voice data is used as voice data corresponding to a key resynchronization period in a key resynchronization process. In this case, user clearly recognizes the degradation of voice quality in a key resynchronization period since the used voice data is quite different from corresponding original voice data.

Particularly, in one-way wireless communication environment, data is transmitted only in one direction and thus it is impossible to check correction reception of data. In case that encrypted data is transmitted, when a receiver does not receive initial key information, data of a corresponding period cannot be decoded.

To solve the above-described restriction, encryption communication in one-way wireless communication environment employs a key resynchronization method in which key information is periodically sent. In the key resynchronization method, if data used in encryption communication is digitalized voice data, a silent period equal to a key resynchronization period is produced. The silent period is periodically produced, which degrades communication quality at the receiver.

Therefore, it is required to compensate voice data value corresponding to a key resynchronization period in one-way wireless encryption communication.

For instance, in one-way wireless communication such as HAM, there are splicing, silence substitution, noise substitution, repetition techniques, and the like for compensating frame loss produced in voice data transmission.

Such techniques are used to estimate the value of lost voice frame in one-way wireless communication. According to the splicing technique that superposes two adjacent frames, blank due to frame loss is not produced but timing for streams becomes inconsistent. According to the silence substitution technique that replaces a period corresponding to frame loss with silence, the capability of a receiver is decreased when the length of a lost packet is long. According to the noise substitution technique that uses human phoneme restoration ability in which lost phoneme is restored using adjacent phonemes and surrounding circumstance, the noise substitution technique has different effect on each person. According to the repetition technique that replaces a lost frame with the nearest voice data, when the length of the lost frame is long, replayed voice is drawn out.

In addition to the above-described techniques, there is a restoration technique that restores voice data corresponding to a lost frame using state information utilized by a voice compression codec, but this technique is dependent on the codec and computation amount is increased because each voice compression codec utilizes different state information.

European Patent Application EP 1921608 (A1) discloses a method of inserting vector information for estimating voice data in a key re-synchronization period, a method of transmitting vector information, and a method of estimating voice data in a key re-synchronization period using vector information, capable of estimating the voice data that corresponds to a silent period occurring in a key re-synchronization process when an encrypted digital voice is transmitted in a unidirectional wireless communication environment. A transmitter side inserts accumulation information (i.e., vector information) of a voice change direction of the transmitted previous frame in a key re-synchronization frame, using a voice feature that draws a sine wave, when making the key re-synchronization frame for the re-synchronization, and transmits the key re-synchronization frame with the vector information inserted thereto.; A receiver side estimates the voice data value in the key re-synchronization period using the accumulation information (i.e., vector information) in the voice change direction and slopes of the received voice data, to minimize the difference between the original voice and the estimated voice.

## SUMMARY OF THE INVENTION

The present invention is defined in the independent claims. The dependent claims define particular embodiments of the invention.

Accordingly, the present invention is directed to an apparatus and method for estimating a voice data value corresponding to a silent period periodically produced due to a key resynchronization process in one-way wireless communication environment using voice change direction information and change ratio of slopes computed using voice data.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the invention, as embodied and broadly described herein, there is provided an apparatus for transmitting/receiving voice data to estimate a voice data value corresponding to a key resynchronization period, as set forth in claim 1.

Moreover, in accordance with the present invention, there is provided a method for receiving voice data to estimate a voice data value corresponding to a key resynchronization period, as set forth in claim 4.

It is to be understood that the following detailed description of the present invention exemplary and explanatory and is intended to provide further explanation of the invention as claimed.

## BRIEF DESCRIPTION OF THE DRAWINGS

The accompanying drawings, which are included to provide a further understanding of the invention, are incorporated in and constitute a part of this application, and together with the description serve to explain the principle of the invention. In the drawings:

FIG. 1 illustrates an apparatus for transmitting/receiving voice data, capable of estimating a voice data value corresponding to a key resynchronization period;

FIG. 2 illustrates a flowchart of a method for transmitting voice data to estimate voice data corresponding to a key resynchronization period;

FIG. 3 illustrates a flowchart of a method for receiving voice data to estimate a voice data value corresponding to a key resynchronization period; and

FIGs. 4A and 4B illustrate schematic diagrams showing a calculation process of a voice data value corresponding to a key resynchronization period in the apparatus of FIG 1.

## DETAILED DESCRIPTION OF THE INVENTION

Reference will now be made in detail to the preferred embodiments of the present invention, examples of which are illustrated in the accompanying drawings. In the following description, well-known functions or constructions are not described in detail since they would obscure the invention in unnecessary detail.

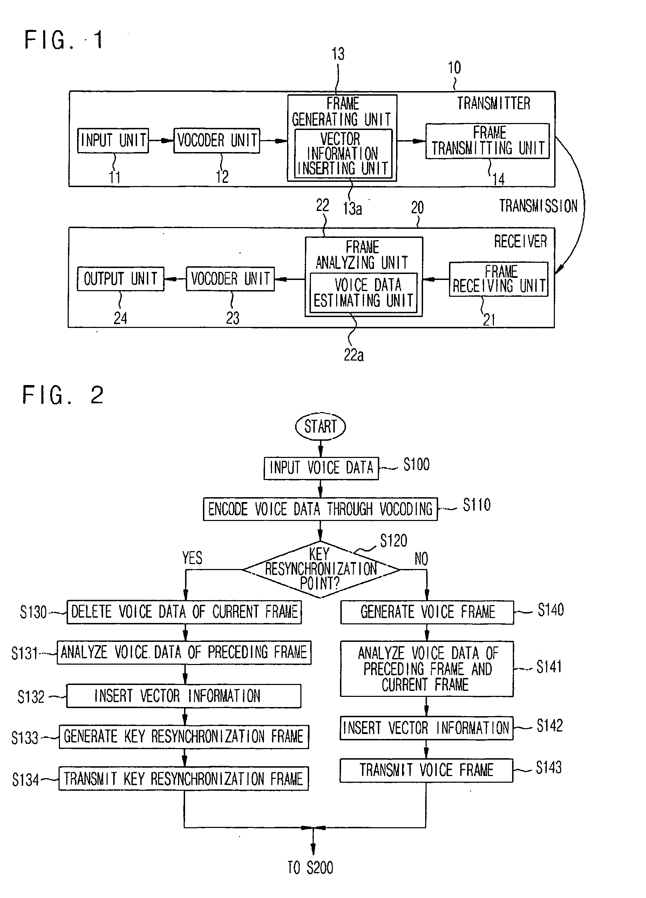

FIG. 1 illustrates an apparatus for transmitting/receiving voice data, capable of estimating a voice data value corresponding to a key resynchronization period. The apparatus is primarily comprised of a transmitter 10 and a receiver 20.

In order to transmit voice data, the transmitter 10 generates a key resynchronization frame containing key resynchronization information and vector information on the voice data inserted thereinto, and transmits the key resynchronization frame.

Specifically, the transmitter 10 includes an input unit 11, a vocoder unit 12, a frame generating unit 13 and a frame transmitting unit 14. The input unit 11 such as a microphone receives voice data. The vocoder unit 12 encodes the voice data. The frame generating unit 13 determines whether the transmitting point of the encoded voice data is a key resynchronization point and generates a key resynchronization frame or a voice frame for the encoded voice data according to whether key resynchronization information is needed. The frame transmitting unit 14 transmits the generated frame.

The frame generating unit 13 includes a vector information inserting unit 13a for insertion of the vector information on voice data when the key resynchronization frame or the voice frame is generated. The vector information on the voice data means voice change direction (+, -) information that is obtained from a difference between current voice data and preceding voice data.

In other words, the frame generating unit 13 accumulates voice change direction (+, -) information, i.e., the vector information on voice data, which is derived from the difference between current voice data and immediately preceding voice data. In order to transmit the key synchronization information, the frame generating unit 13 generates the key resynchronization frame into which the key resynchronization information and the accumulated vector information are inserted. The vector information is also inserted into the voice frame and then the voice frame containing the accumulate vector information is transmitted.

In brief, the frame generating unit 13 stores the vector information on the voice data. When voice data is transmitted, the frame generating unit 13 determines whether a transmitting point of the voice data corresponds to a key resynchronization point. When the transmitting point corresponds to the key resynchronization point, the frame generating unit 13 generates a key resynchronization frame having the stored vector information inserted thereinto. When the transmitting point does not correspond to the key resynchronization point, it generates the voice frame for the voice data to be transmitted and inserts the stored vector information into the voice frame.

On the other hand, receiving the key resynchronization frame from the transmitter 10, the receiver 20 extracts the vector information on voice data from the key resynchronization frame and estimates a voice data value at the key resynchronization point.

Specifically, the receiver 20 includes a frame receiving unit 21, a frame analyzing unit 22, a vocoder unit 23, and an output unit 24. The frame receiving unit 21 receives frames from the transmitter 10. The frame analyzing unit 22 determines whether the received frame contains key resynchronization information and identifies the type of the received frame. When the received frame is a key resynchronization frame, the receiver 20 extracts vector information inserted into the key resynchronization frame and estimates a voice data value corresponding to the key resynchronization period, i.e., a silent period. The vocoder unit 23 decodes encoded voice data of the key resynchronization frame. The output unit 24 outputs the decoded voice data.

Particularly, the frame analyzing unit 22 determines the type of a received frame based on whether it contains key resynchronization information. The frame analyzing unit 22 includes a voice data estimating unit 22a. When the received frame is a key resynchronization frame, the voice data estimating unit 22a extracts vector information from the key resynchronization frame and estimates a voice data value corresponding to a key resynchronization period.

The frame analyzing unit 22 analyzes a header of the received frame to determine whether the header contains the key resynchronization information. When the header contains the key resynchronization information, the received frame is a key resynchronization frame. Thus, the frame analyzing unit 22 extracts the inserted vector information.

The voice data estimating unit 22a calculates slopes using voice data in preceding frames and estimates the voice data value corresponding to the key resynchronization period using the calculated slopes and the extracted vector information.

Specifically, when the extracted vector information is +, a straight line having a smaller slope is obtained using the change ratio between the calculated slopes. Then, the voice data value corresponding to the key resynchronization period is chosen from among values on the obtained straight line. On the other hand, when the extracted vector information is -, a straight line having a greater slope is obtained using the change ratio between the calculated slopes. Then, the voice data value is obtained on the obtained straight line.

FIG. 2 illustrates a flowchart of a voice data transmitting method for estimating a voice data value corresponding to a key resynchronization period.

Referring to FIG. 2, in step 100, the input unit 11 such as a microphone receives voice data. In step 110, the vocoder unit 12 encodes the voice data.

In step 120, the frame generating unit 13 determines whether a transmitting point of the voice data corresponds to a key resynchronization point.

When the transmitting point of the voice data is a key resynchronization point, in step 130, the voice data of a corresponding current frame is deleted. In step 131, it is performed to analyze voice data of a preceding frame with the voice data of the current frame. In step 132, voice change direction (+, -) information, i.e., vector information, is calculated.

The voice change direction (+, -) information is obtained using the characteristic of voice data. That is, voice data has sine waveform having no sudden change and thus vector information continuously increases when voice data values increase, and continuously decreases when voice data values decrease. The vector information is defined as increase direction when a difference between current voice data and immediately preceding voice data is +. On the contrary, the vector information is defined as decrease direction when the difference is -.

In step 133, a key resynchronization frame is generated by inserting the vector information and key resynchronization information thereinto instead of voice data. In step 134, the generated key resynchronization frame is transmitted.

When the transmitting point of the current frame does not correspond to a key resynchronization point, in step 140, a voice frame is generated by inserting voice data thereinto. In step 141, voice data of a preceding frame and the current frame are analyzed to obtain vector information and the vector information is stored in an internal memory of the transmitter 10. In step 142, the vector information is inserted into the voice frame. In step 143, the voice frame is transmitted.

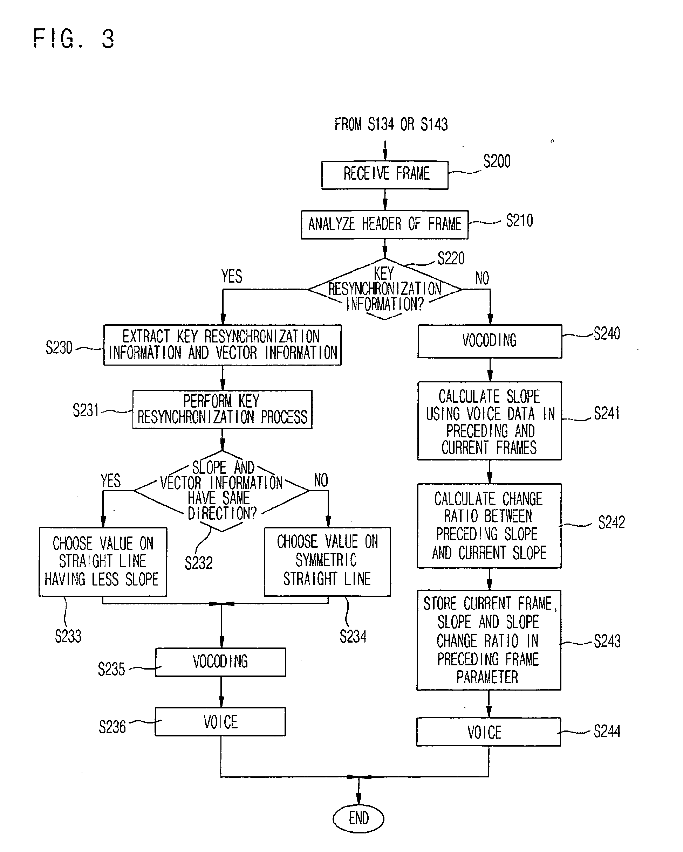

FIG. 3 illustrates a flowchart of a voice data receiving method for estimating a voice data value corresponding to a key resynchronization period.

Referring to FIG. 3, in step 200, the frame receiving unit 21 of the receiver 20 receives a frame transmitted from the transmitter 10. In step 210, the frame analyzing unit 22 analyzes a header of the received frame to determine the type of the received frame.

In step 230, when the received frame is a key resynchronization frame, key resynchronization information and vector information of voice change direction (+, -) information are extracted from the received frame.

In step 231, a resynchronization process is performed using the extracted key resynchronization information. In step 232, it is performed to analyze the extracted vector information and change ratio between slopes obtained using voice data of received preceding frames to determine voice change direction.

In step 233, when the change ratio and the extracted vector information have the same direction, i.e., increase direction or decrease direction, the voice data value corresponding to the key resynchronization period, i.e., a silent period, is chosen from among values on a straight line having a slope less than the slope obtained using the voice data of the received preceding frames stored in an internal memory (not shown) of the receiver 20.

In step 234, when the change ratio and the extracted vector information do not have the same direction, using the change ratio between slopes obtained using the voice data of the received preceding frames, a straight line having a slope greater than the slopes is obtained, and the voice data value corresponding to the silent period is chosen from among values on the straight line.

In step 235, the vocoder unit 23 decodes the chosen voice data value corresponding to the silent period. In step, 236, the decoded voice data is outputted.

In step 240, when the received frame is not a key resynchronization frame, the vocoder unit 23 decodes encoded voice data of the received frame.

In step 241, it is performed to calculate a straight line and the slope of the straight line. Here, the straight line connects a voice data value of a preceding frame and a voice data value of a current frame, and the preceding and current frames are stored in the internal memory of the receiver 20. In step 242, it is performed to calculate change ratio between the slopes obtained through the above-described process. In step 243, the current frame is stored in the internal memory (not shown) for substantial use. In step 244, decoded voice data by the vocoder 23 is outputted.

That is, using a slope serving as change ratio of voice data of received preceding voice frames, change ratio of slopes, and an extracted voice change direction information on voice data as vector information, the receiver 20 can estimate a voice data value corresponding to a silent period, which is produced due to a key resynchronization process in one-way wireless communication environment, similar to a corresponding original voice data value.

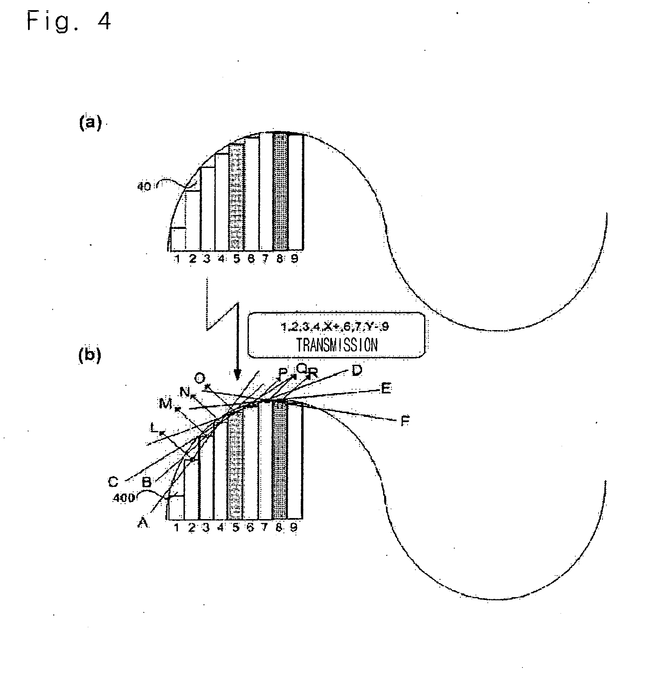

FIGs. 4A and 4B illustrate schematic diagrams showing a calculation process of a voice data value corresponding to a key resynchronization period in the apparatus of FIG. 1. FIG. 4A illustrates a schematic diagram showing a process for insertion of calculated vector information at the transmitter 10. FIG. 4B illustrates a schematic diagram showing a process for estimating a voice data value corresponding to a key resynchronization period by extracting the vector information at the receiver 10.

It is assumed that $5^{th}$ and $8^{th}$ periods indicate key resynchronization point periods.

In an encoding process of voice with sine waveform, when it is a resynchronization point, the transmitter 10 deletes voice data of the $5^{th}$ and $8^{th}$ periods that are key resynchronization periods corresponding to the resynchronization points, and inserts key resynchronization information.

The voice data of the $5^{th}$ period is replaced with voice change direction (+) information and key resynchronization information X. Here, voice change direction (+) is obtained by subtracting the voice data value of the $4^{th}$ period from the voice data value of the $5^{th}$ period. Similarly, the voice data of the $8^{th}$ period is replaced with voice change direction (-) information and key resynchronization information Y. Here, voice change direction (-) is obtained by subtracting the voice data value of the $7^{th}$ period from the voice data value of the $8^{th}$ period. The replaced data are transmitted to the receiver 20.

Receiving key resynchronization data corresponding to the $5^{th}$ period, the receiver 20 determines a straight line C. The slope of the straight line C is calculated using a decrease ratio between the slope of a straight line A and the slope of a straight line B. The straight line A is determined using the voice data values of the $2^{nd}$ period L and $3^{rd}$ period M, and the straight line B is determined using the voice data values of the $3^{rd}$ period M and $4^{th}$ period N. The slope of the straight line C is equal to voice change direction (+) of the voice change direction information in a corresponding received frame, and thus the voice data value O of $5^{th}$ period is chosen from among values on the straight line C. An example according to the above-described process is disclosed using following equations.

$$A = \frac{M_y - L_y}{M_x - L_x}$$

$$B = \frac{N_y - M_y}{N_x - M_x}$$

$$C = B - \frac{B}{A}$$

wherein, My, Ly, Ny are y coordinate values of positions M, L, N in FIG. 4B, respectively. Mx, Lx, Nx are x coordinate values of positions M, L, N in FIG. 4B, respectively.

Receiving key resynchronization data corresponding to the $8^{th}$ period, the receiver 20 determines a straight line E. The slope of the straight line E is calculated using an increase ratio between the slope of a straight line C and the slope of a straight line D. The straight line C is determined using the voice data values of the $5^{th}$ period O and $6^{th}$ period P, and the straight line D is determined using the voice data values of the $6^{th}$ period P and $7^{th}$ period Q. Since the slope of the straight line E is opposite to voice change direction (-) of the voice change direction information in a corresponding received frame, the voice data value R of the $8^{th}$ period is chosen from among values on a straight line F symmetrical with respect to the straight line E. An example according to the above-described process is disclosed using following equations.

$$C = \frac{P_y - O_y}{P_x - O_x}$$

$$D = \frac{Q_y - P_y}{Q_x - P_x}$$

$$E = D - \frac{D}{C}$$

$$F = -E$$

wherein, Py, Oy, Qy are y coordinate values of positions P, O, Q in FIG. 4B, respectively. Px, Ox, Qx are x coordinate values of positions P, O, Q in FIG. 4B, respectively.

Specifically, in case of the 8th period, the slope of the straight line E has a positive value (+) but the voice change direction of the 8th period has a negative value (-), and thus the voice data value of the 8th period is chosen from among values on the straight line F symmetrical with respect to the straight line E.

As described above, the present invention can improve communication quality at the receiver by estimating a voice data value corresponding to a silent period due to periodic key resynchronization in one-way wireless communication environment using the gradually changing characteristic of voice data.

In addition, in the present invention, there is no need to transmit a lot of additional information to estimate the voice data value and computation amount is reduced, and thus additional load is not applied to a corresponding communication system.

It will be apparent to those skilled in the art that various modifications and variations can be made in the present invention. Thus, it is intended that the present invention covers the modifications and variations of this invention provided they come within the scope of the appended claims.

**Claims**

1. An apparatus for transmitting/receiving voice data in order to estimate a voice data value corresponding to a key resynchronization period, the apparatus comprising:

   a transmitter (10) for generating a voice frame and a key resynchronization frame containing key resynchronization information and vector information on voice data inserted thereinto and transmitting the voice frame and the key resynchronization frame; and
   a rcceiver (20) for receiving the voice frame and the key resynchronization frame from the transmitter, extracting the vector information inserted in the key resynchronization frame, and estimating the voice data value corresponding to the key resynchronization period;

wherein the vector information on voice data is voice change direction information comprising increase and decrease direction that is obtained from a difference between current voice data and preceding voice data;
wherein the receiver comprises:

   a frame receiving unit (21) for receiving the voice frame and the key resynchronization frame from the transmitter;
   a frame analyzing unit (22) for determining the type of the received frame based on whether the received frame contains the key resynchronization information, and including a voice data estimating unit (22a) for extracting the vector information when the received frame is a key resynchronization frame and estimating the voice data value corresponding to the key resynchronization period;
   a vocoder unit (23) for decoding encoded voice data of the voice frame; and
   an output unit (22) for outputting the decoded voice data;
   the apparatus being **characterized in that** the voice data estimating unit is configured to estimate the voice data value corresponding to the key resynchronization period by comparing the extracted vector information with a difference between slopes obtained using voice data in preceding frames.

2. The apparatus of claim 1, wherein the transmitter (10) comprises:

   an input unit (11) for receiving voice data;
   a vocoder unit (12) for encoding the voice data;
   a frame generating unit (13) for generating the key resynchronization frame or the voice frame for the encoded voice data according to whether the key resynchronization information is needed, and including a vector information inserting unit (13a) for inserting the vector information when the key resynchronization frame or the voice frame is generated; and
   a frame transmitting unit (14) for transmitting the generated frame to the receiver.

3. The apparatus of claim 1, wherein the voice data value corresponding to the key resynchronization period is chosen from values on a straight line having a slope obtained using the difference between the slopes obtained using voice data in preceding frames when the extracted vector information is increase direction, or the voice data value is chosen from values on a straight line having a slope opposite to the slope obtained using the difference between the slopes when the extracted vector information is decrease direction.

4. A method for receiving voice data to estimate a voice data value corresponding to a key resynchronization period, the method comprising;

analyzing a header of a received frame to determine whether the frame contains key resynchronization information;
recognizing the frame as a key resynchronization frame when the frame contains key resynchronization information, extracting vector information on voice data inserted in the key resynchronization frame, and estimating the voice data value corresponding to the key resynchronization period; and
decoding encoded voice data of the key resynchronization frame and outputting the decoded voice data;

wherein the vector information on voice data is voice change direction information comprising increase and decrease direction that is obtained from a difference between current voice data and preceding voice data;
the method being **characterized in that** the estimating of the voice data value corresponding to the key resynchronization period comprises estimating the voice data value by comparing the extracted vector information with a difference between slopes obtained using voice data in preceding frames.

5. The method of claim 4, wherein the voice data value corresponding to the key resynchronization period is chosen from values on a straight line having a slope obtained using the difference between the slopes obtained using voice data in preceding frames when the extracted vector information is increase direction, or the voice data value is chosen from values on a straight line having a slope opposite to the slope obtained using the difference between the slopes when the extracted vector information is decrease direction.

6. The method of claim 4, wherein the determining of whether the received frame contains key resynchronization information comprises:

recognizing the received frame as a voice frame when the received frame does not contain key resynchronization information,
decoding encoded voice data of the voice frame, calculating slopes using voice data in a current received frame and preceding received frame and a difference between the calculated slopes, and storing the calculated slopes and the difference.

**Patentansprüche**

1. Vorrichtung zum Senden/Empfangen von Sprachdaten, um einen Sprachdatenwert, der einer Schlüsselresynchronisationsperiode entspricht, zu schätzen, wobei die Vorrichtung umfasst:

einen Sender (10), um einen Sprachrahmen und einen Schlüsselresynchronisationsrahmen, der Schlüsselresynchronisationsinformationen und Vektorinformationen bezüglich Sprachdaten, die in ihn eingefügt sind, enthält, zu erzeugen und um den Sprachrahmen und den Schlüsselresynchronisationsrahmen zu senden; und
einen Empfänger (20), um den Sprachrahmen und den Schlüsselresynchronisationsrahmen von dem Sender zu empfangen, um die in den Schlüsselresynchronisationsrahmen eingefügten Vektorinformationen zu extrahieren und um den Sprachdatenwert, der der Schlüsselresynchronisationsperiode entspricht, zu schätzen;

wobei die Vektorinformationen bezüglich Sprachdaten Sprachänderungsrichtungsinformationen sind, die eine Zunahme- und eine Abnahmerichtung enthalten und die aus einer Differenz zwischen momentanen Sprachdaten und vorhergehenden Sprachdaten erhalten werden;
wobei der Empfänger umfasst:

eine Rahmenempfangseinheit (21), um den Sprachrahmen und den Schlüsselresynchronisationsrahmen von dem Sender zu empfangen;
eine Rahmenanalyseeinheit (22), um den Typ des empfangenen Rahmens anhand der Tatsache zu bestimmen, ob der empfangene Rahmen die Schlüsselresynchronisationsinformationen enthält, die eine Sprachdaten-Schätzeinheit (22a) enthält, um die Vektorinformationen zu extrahieren, wenn der empfangene Rahmen ein Schlüsselresynchronisationsrahmen ist, und um den Sprachdatenwert, der der Schlüsselresynchronisationsperiode entspricht, zu schätzen;
eine Vocodereinheit (23), um codierte Sprachdaten des Sprachrahmens zu decodieren; und
eine Ausgabeeinheit (22), um die decodierten Sprachdaten auszugeben;

wobei die Vorrichtung **dadurch gekennzeichnet ist, dass** die Sprachdaten-Schätzeinheit konfiguriert ist, um den Sprachdatenwert, der der Schlüsselresynchronisationsperiode entspricht, durch Vergleichen der extrahierten Vektorinformationen mit einer Differenz zwischen Steigungen, die unter Verwendung von Sprachdaten in vorhergehenden Rahmen erhalten werden, zu schätzen.

**2.** Vorrichtung nach Anspruch 1, wobei der Sender (10) umfasst:

eine Eingabeeinheit (11), um Sprachdaten zu empfangen;
eine Vocodereinheit (12), um die Sprachdaten zu codieren;
eine Rahmenerzeugungseinheit (13), um in Übereinstimmung mit der Tatsache, ob die Schlüsselresynchronisationsinformationen erforderlich sind, den Schlüsselresynchronisationsrahmen oder den Sprachrahmen für die codierten Sprachdaten zu erzeugen, die eine Vektorinformation-Einfügungseinheit (13a) zum Einfügen der Vektorinformationen, wenn der Schlüsselresynchronisationsrahmen oder der Sprachrahmen erzeugt wird, enthält; und
eine Rahmensendeeinheit (14), um den erzeugten Rahmen zu dem Empfänger zu senden.

**3.** Vorrichtung nach Anspruch 1, wobei der Sprachdatenwert, der der Schlüsselresynchronisationsperiode entspricht, aus Werten auf einer geraden Linie gewählt wird, die eine Steigung besitzt, die unter Verwendung der Differenz zwischen den Steigungen erhalten wird, die unter Verwendung der Sprachdaten in vorhergehenden Rahmen erhalten werden, wenn die extrahierten Vektorinformationen die zunehmende Richtung sind, oder wobei der Sprachdatenwert aus Werten auf einer geraden Linie gewählt wird, die eine Steigung entgegengesetzt zu der Steigung besitzt, die unter Verwendung der Differenz zwischen den Steigungen erhalten wird, wenn die extrahierten Vektorinformationen die abnehmende Richtung sind.

**4.** Verfahren zum Empfangen von Sprachdaten, um einen Sprachdatenwert zu schätzen, der einer Schlüsselresynchronisationsperiode entspricht, wobei das Verfahren umfasst:

Analysieren eines Kopfsatzes eines empfangenen Rahmens, um zu bestimmen, ob der Rahmen Schlüsselresynchronisationsinformationen enthält; Erkennen des Rahmens als einen Schlüsselresynchronisationsrahmen, wenn der Rahmen Schlüsselresynchronisationsinformationen enthält, Extrahieren von Vektorinformationen bezüglich Sprachdaten, die in den Schlüsselresynchronisationsrahmen eingefügt sind, und Schätzen des Sprachdatenwerts, der der Schlüsselresynchronisationsperiode entspricht; und
Decodieren codierter Sprachdaten des Schlüsselresynchronisationsrahmens und Ausgeben der decodierten Sprachdaten;

wobei die Vektorinformationen bezüglich Sprachdaten Sprachänderungsrichtungsinformationen sind, die eine zunehmende und eine abnehmende Richtung enthalten und die aus einer Differenz zwischen momentanen Sprachdaten und vorhergehenden Sprachdaten erhalten werden;
wobei das Verfahren **dadurch gekennzeichnet ist, dass** das Schätzen des Sprachdatenwerts, der der Schlüsselresynchronisationsperiode entspricht, das Schätzen des Sprachdatenwerts durch Vergleichen der extrahierten Vektorinformationen mit einer Differenz zwischen Steigungen, die unter Verwendung von Sprachdaten in vorhergehenden Rahmen erhalten werden, umfasst.

**5.** Verfahren nach Anspruch 4, wobei der Sprachdatenwert, der der Schlüsselresynchronisationsperiode entspricht, aus Werten auf einer geraden Linie gewählt wird, die eine Steigung besitzt, die unter Verwendung der Differenz zwischen den Steigungen erhalten wird, die unter Verwendung von Sprachdaten im vorhergehenden Rahmen erhalten werden, wenn die extrahierten Vektorinformationen eine zunehmende Richtung sind, oder wobei der Sprachdatenwert aus Werten auf einer geraden Linie gewählt wird, die eine Steigung entgegengesetzt zu der Steigung besitzt, die unter Verwendung der Differenz zwischen den Steigungen erhalten wird, wenn die extrahierten Vektorinformationen eine abnehmende Richtung sind.

**6.** Verfahren nach Anspruch 4, wobei das Bestimmen, ob der empfangene Rahmen Schlüsselresynchronisationsinformationen enthält, umfasst:

Erkennen des empfangenen Rahmens als einen Sprachrahmen, wenn der empfangene Rahmen keine Schlüsselresynchronisationsinformationen enthält,
Decodieren codierter Sprachdaten des Sprachrahmens, Berechnen von Steigungen unter Verwendung von Sprachdaten in einem momentanen empfangenen Rahmen und in einem früher empfangenen Rahmen sowie einer Differenz zwischen den berechneten Steigungen und Speichern der berechneten Steigungen und der Differenz.

**Revendications**

**1.** Appareil pour transmettre / recevoir des données vocales afin d'estimer une valeur de données vocales correspondant à une période de resynchronisation de clé, l'appareil comprenant :

un transmetteur (10) pour générer une trame vocale et une trame de resynchronisation de clé contenant des informations de resynchronisation de clé et des informations de vecteur sur des données vocales insérées à l'intérieur et transmettre la trame vocale et la trame de resynchronisation de clé ; et

un récepteur (20) pour recevoir la trame vocale et la trame de resynchronisation de clé en provenance du transmetteur, extraire les informations de vecteur insérées dans la trame de resynchronisation de clé, et estimer la valeur de données vocales correspondant à la période de resynchronisation de clé ;

dans lequel les informations de vecteur sur des données vocales sont des informations de direction de changement de voix comprenant une direction d'augmentation et de diminution qui sont obtenues à partir d'une différence entre des données vocales actuelles et des données vocales précédentes ;
dans lequel le récepteur comprend :

une unité de réception de trame (21) pour recevoir la trame vocale et la trame de resynchronisation de clé en provenance du transmetteur ;
une unité d'analyse de trame (22) pour déterminer le type de la trame reçue sur la base de si la trame reçue contient les informations de resynchronisation de clé, et incluant une unité d'estimation de données vocales (22a) pour extraire les informations de vecteur lorsque la trame reçue est une trame de resynchronisation de clé et estimer la valeur de données vocales correspondant à la période de resynchronisation de clé ;
une unité de vocodeur (23) pour décoder des données vocales codées de la trame vocale ; et
une unité de sortie (22) pour sortir les données vocales décodées ;
l'appareil étant **caractérisé en ce que** l'unité d'estimation de données vocales est configurée pour estimer la valeur de données vocales correspondant à la période de resynchronisation de clé en comparant les informations de vecteur extraites avec une différence entre des pentes obtenues en utilisant des données vocales dans des trames précédentes.

2. Appareil selon la revendication 1, dans lequel le transmetteur (10) comprend :

une unité d'entrée (11) pour recevoir des données vocales ;
une unité de vocodeur (12) pour coder les données vocales ;
une unité de génération de trame (13) pour générer la trame de resynchronisation de clé ou la trame vocale pour les données vocales codées selon si les informations de resynchronisation de clé sont nécessaires et incluant une unité d'insertion d'informations de vecteur (13a) pour insérer les informations de vecteur lorsque la trame de resynchronisation de clé ou la trame vocale est générée ; et
une unité de transmission de trame (14) pour transmettre la trame générée au récepteur.

3. Appareil selon la revendication 1, dans lequel la valeur de données vocales correspondant à la période de resynchronisation de clé est choisie parmi des valeurs sur une ligne droite ayant une pente obtenue en utilisant la différence entre les pentes obtenues en utilisant des données vocales dans des trames précédentes lorsque les informations de vecteur extraites sont une direction d'augmentation ou la valeur de données vocales est choisie parmi des valeurs sur une ligne droite ayant une pente opposée à la pente obtenue en utilisant la différence entre les pentes lorsque les informations de vecteur extraites sont une direction de diminution.

4. Procédé pour recevoir des données vocales afin d'estimer une valeur de données vocales correspondant à une période de resynchronisation de clé, le procédé comprenant :

l'analyse d'un en-tête d'une trame reçue afin de déterminer si la trame contient des informations de resynchronisation de clé ;
la reconnaissance de la trame comme une trame de resynchronisation de clé lorsque la trame contient des informations de resynchronisation de clé, l'extraction d'informations de vecteur sur des données vocales insérées dans la trame de resynchronisation de clé, et l'estimation de la valeur de données vocales correspondant à la période de resynchronisation de clé ; et
le décodage de données vocales codées de la trame de resynchronisation de clé et la sortie des données vocales décodées ;

dans lequel les informations de vecteur sur des données vocales sont des informations de direction de changement de voix comprenant une direction d'augmentation et de diminution qui sont obtenues à partir d'une différence entre des données vocales actuelles et des données vocales précédentes ;
le procédé étant **caractérisé en ce que** l'estimation de la valeur de données vocales correspondant à la période de resynchronisation de clé comprend l'estimation de la valeur de données vocales en comparant les informations de vecteur extraites avec une différence entre des pentes obtenues en utilisant des données vocales dans des trames précédentes.

5. Procédé selon la revendication 4, dans lequel la valeur de données vocales correspondant à la période de resynchronisation de clé est choisie parmi des valeurs sur une ligne droite ayant une pente obtenue en utilisant la différence entre les pentes obtenues en utilisant des données vocales dans des trames précédentes lorsque les informations de vecteur extraites sont une direction d'augmentation ou la valeur de données vocales est choisie parmi des valeurs sur une ligne droite ayant une pente opposée à la pente obtenue en utilisant la différence entre les pentes lorsque les informations de vecteur extraites sont une direction de diminution.

**6.** Procédé selon la revendication 4, dans lequel la détermination de si la trame reçue contient des informations de resynchronisation de clé comprend :

la reconnaissance de la trame reçue comme une trame vocale lorsque la trame reçue ne contient pas d'informations de resynchronisation de clé, le décodage de données vocales codées de la trame vocale, le calcul de pentes en utilisant des données vocales dans une trame reçue actuelle et une trame reçue précédente et d'une différence entre les pentes calculées, et le stockage des pentes calculées et de la différence.

FIG. 1

FIG. 2

FIG. 3

FROM S134 OR S143

RECEIVE FRAME ⎯ S200

ANALYZE HEADER OF FRAME ⎯ S210

S220
KEY RESYNCHRONIZATION INFORMATION?

YES ← → NO

EXTRACT KEY RESYNCHRONIZATION INFORMATION AND VECTOR INFORMATION ⎯ S230

VOCODING ⎯ S240

PERFORM KEY RESYNCHRONIZATION PROCESS ⎯ S231

CALCULATE SLOPE USING VOICE DATA IN PRECEDING AND CURRENT FRAMES ⎯ S241

SLOPE AND VECTOR INFORMATION HAVE SAME DIRECTION? ⎯ S232

YES ← → NO

CHOOSE VALUE ON STRAIGHT LINE HAVING LESS SLOPE ⎯ S233

CHOOSE VALUE ON SYMMETRIC STRAIGHT LINE ⎯ S234

CALCULATE CHANGE RATIO BETWEEN PRECEDING SLOPE AND CURRENT SLOPE ⎯ S242

VOCODING ⎯ S235

STORE CURRENT FRAME, SLOPE AND SLOPE CHANGE RATIO IN PRECEDING FRAME PARAMETER ⎯ S243

VOICE ⎯ S236

VOICE ⎯ S244

END

Fig. 4

(a)

(b)

1.2.3.4.X+.6.7.Y-.9
TRANSMISSION

**EP 2 006 838 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1921608 A